# EUROPÄISCHE PATENTSCHRIFT

(11) **EP 0 928 884 B1**
(45) Veröffentlichungstag und Bekanntmachung des Hinweises auf die Patenterteilung: **27.09.2006**
(21) Anmeldenummer: 98118527.5
(22) Anmeldetag: 30.09.1998
(51) Int. Cl.: F01N 3/20

(54) **Gemischabgabevorrichtung**
Mixture delivery device
Dispositif de distribution d'un mélange

(30) Priorität: 08.01.1998 DE 19800421
(43) Veröffentlichungstag der Anmeldung: 14.07.1999
(73) Patentinhaber: ROBERT BOSCH GMBH, 70442 Stuttgart (DE)
(72) Erfinder: Harndorf, Horst, Ing., 34270 Schauenburg 1 (DE)

(56) Entgegenhaltungen:
- EP-A- 0 586 913
- WO-A-96/08639
- DE-A- 3 835 939
- DE-U- 9 308 772

## Beschreibung

### Stand der Technik

Die Erfindung geht aus von einer Vorrichtung zur Einführung eines Reduktionsmittels in ein Abgassystem einer Brennkraftmaschine nach der Gattung des Hauptanspruchs. Es besteht auch weiterhin die Forderung nach einer Verringerung schädlicher Abgasbestandteile von Brennkraftmaschinen. Zur Stickoxid-Reduktion in den Abgasen von Brennkraftmaschinen, insbesondere gemischverdichtenden selbstzündenden Brennkraftmaschinen, wird eine Harnstoff-Wasser-Lösung vor einen Katalysator in das Abgassystem der Brennkraftmaschine eingebracht. Im Katalysator wird der eingebrachte Harnstoff durch chemische Reaktionen in Ammoniak überführt, welcher die Reduktion von Stickoxiden bewirkt. Es ist schon eine Gemischabgabevorrichtung bekannt (EP 0 586 913 A2), bei der die Harnstoff-Wasser-Lösung einem Reduktionsmittelvorratsbehälter entnommen und mittels einer Hamstoffförderpumpe einem Mischraum zugeführt wird, in dem eine Vermischung mit einem Gas erfolgt, bevor dieses Gemisch mittels einer Zerstäuberdüse in das Abgassystem abgegeben wird. Da die Harnstoff-Wasser-Lösung keine Schmiereigenschaften besitzt, erreichen die derzeit verfügbaren Harnstoffförderpumpen noch nicht die geforderten, störungsfreien Betriebszeiten.

Die WO 96/08639 beschreibt eine Vorrichtung zur Einführung eines Reduktionsmittels in ein Abgassystem einer Brennkraftmaschine, bei der ein Zwischenbehälter für das Reduktionsmittel vorgesehen ist, gemäss Anspruch 1, erster Teil.

### Vorteile der Erfindung

Die beispielsweise als Gemischabgabevorrichtung ausgebildete Vorrichtung mit den kennzeichnenden Merkmalen des Hauptanspruchs hat demgegenüber den Vorteil, daß auf einfache Art und Weise auf die Verwendung einer Hamstoffförderpumpe verzichtet werden kann und auch bei Bedarf großer Mengen von Harnstoff-Wasser-Lösung immer ein ausreichender Vorrat zur Verfügung steht, wobei lediglich für einen kleineren, die Harnstoff-Wasser-Lösung aufnehmenden Verbrauchsbehälter die Richtlinien der Druckbehälterverordnung eingehalten werden müssen. Dieser Verbrauchsbehälter ist in Pausen sehr schnell wieder aus dem Vorratsbehälter mit der Harnstoff-Wasser-Lösung nachfüllbar und mit dem erforderlichen Gasdruck beaufschlagbar. Dabei ist es vorteilhaft, eine Druckgasquelle über ein erstes Druckregelventil mit dem Reduktionsmittelverbrauchsbehälter zu verbinden und in einer vorteilhaften Weiterbildung über ein zweites Druckregelventil mit dem Reduktionsmittelvorratsbehälter, wobei dann der vom ersten Druckregelventil geregelte Gasdruck größer als der vom zweiten Druckregelventil geregelte Gasdruck ist. Dadurch steht für die Abgabe der Harnstoff-Wasser-Lösung in das Abgassystem ein ausreichend großer Druck zur Verfügung, während das Nachfüllen des Verbrauchsbehälters bei einem geringeren Druckniveau erfolgt, so daß dabei die Richtlinien der Druckbehälterverordnung nicht beachtet werden müssen. Dabei ist es vorteilhaft, daß zwischen dem ersten Druckregelventil und dem Reduktionsmittelverbrauchsbehälter ein Steuerventil vorgesehen ist, das in einer ersten Schaltstellung eine Verbindung vom Reduktionsmittelverbrauchsbehälter zum ersten Druckregelventil herstellt und in einer zweiten Schaltstellung die Verbindung zum ersten Druckregelventil unterbricht und eine Verbindung von einem Gasraum des Reduktionsmittelverbrauchsbehälters zur Atmosphäre öffnet. Hierdurch läßt sich auf einfache Art und Weise eine schnelle Druckbeaufschlagung der Harnstoff-Wasser-Lösung im Reduktionsmittelverbrauchsbehälter sowie ein schneller Druckabbau erreichen.

Durch die in den Unteransprüchen aufgeführten Maßnahmen sind vorteilhafte Weiterbildungen und Verbesserungen der im Hauptanspruch angegebenen Vorrichtung möglich.

Weiterhin vorteilhaft ist es, zwischen dem Reduktionsmittelvorratsbehälter und dem Reduktionsmittelverbrauchsbehälter ein in Richtung zum Reduktionsmittelverbrauchsbehälter öffnendes Rückschlagventil anzuordnen oder stattdessen ein Nachfüllventil, das in einer ersten Schaltstellung die Verbindung zwischen dem Reduktionsmittelvorratsbehälter und dem Reduktionsmittelverbrauchsbehälter unterbricht und in einer zweiten Schaltstellung zum Nachfüllen des Reduktionsmittelverbrauchsbehälters diese Verbindung öffnet. Dadurch ist sichergestellt, daß vom Reduktionsmittelvorratsbehälter eine schnelle Befüllung des Reduktionsmittelverbrauchsbehälters erfolgen kann, aber eine Rückströmung vom Reduktionsmittelverbrauchsbehälter zum Reduktionsmittelvorratsbehälter verhindert wird.

Im oder am Reduktionsmittelverbrauchsbehälter ist in vorteilhafter Weise ein die Füllhöhe der Harnstoff-Wasser-Lösung messender Füllstandsensor angeordnet, der bei Erreichen der maximal zulässigen Füllhöhe eine weitere Befüllung unterbricht und spätestens bei Erreichen einer bestimmten minimalen Füllhöhe ein Nachfüllen des Reduktionsmittelverbrauchsbehälters einleitet.

In ebenfalls vorteilhafter Weise ist in dem Reduktionsmittelverbrauchsbehälter ein Heizelement angeordnet, das bei zu tiefen Temperaturen ein Gefrieren der Harnstoff-Wasser-Lösung verhindert oder ein Auftauen bewirkt.

### Zeichnung

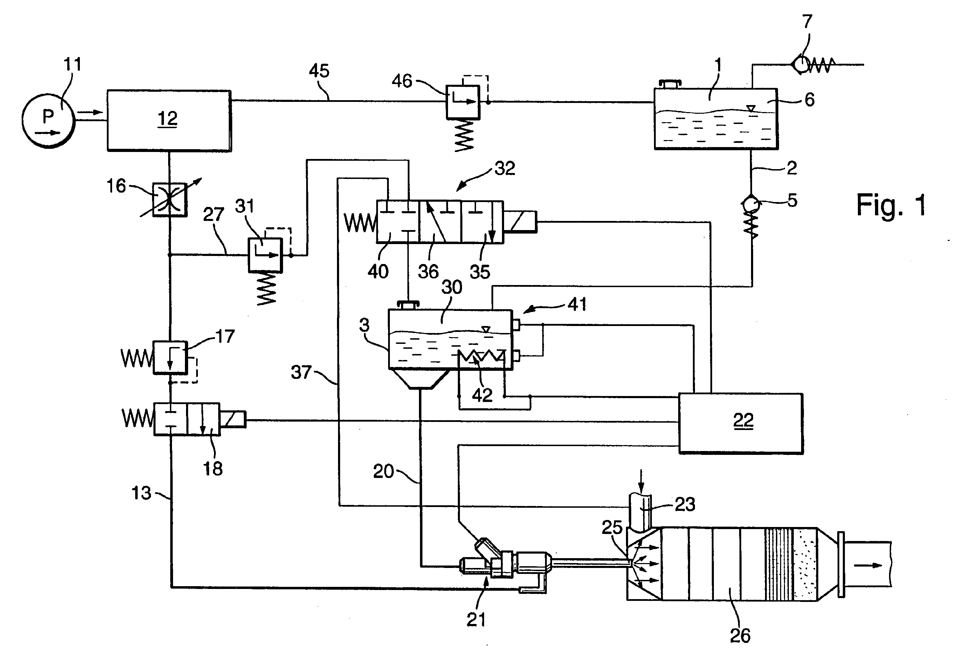

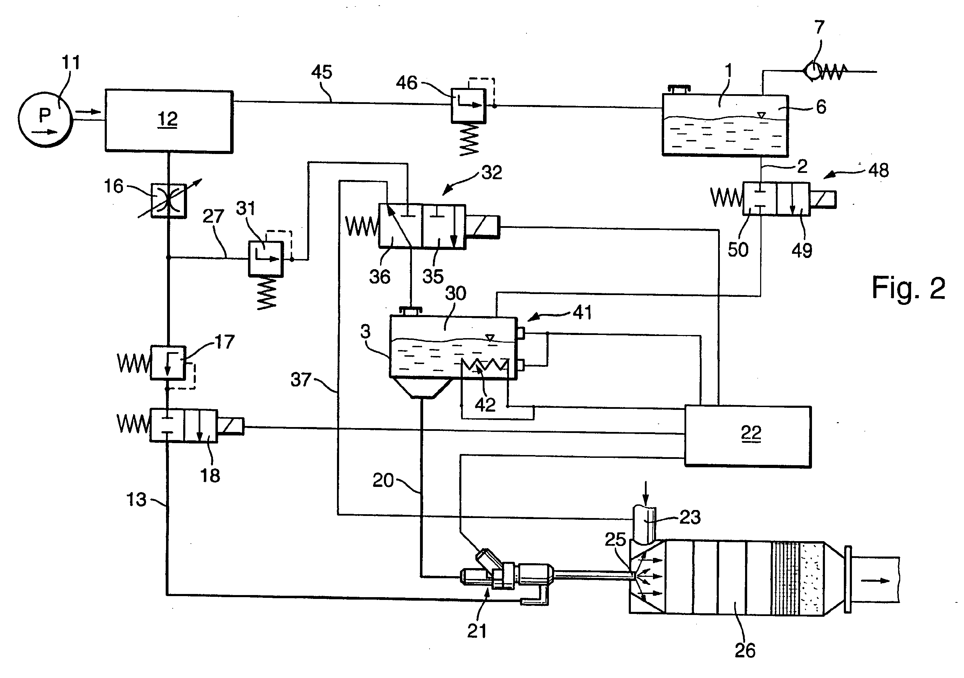

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel einer schematisch dargestellten Gemischabgabevorrichtung von Harnstoff für ein Abgassystem einer Brennkraftmaschine, Figur 2 ein zweites Ausführungsbeispiel einer schematisch dargestellten Gemischabgabevorrichtung von Harnstoff für ein Abgassystem einer Brennkraftmaschine.

### Beschreibung der Ausführungsbeispiele

Bei der Gemischabgabevorrichtung zur Abgabe einer Harnstoff-Wasser-Lösung vor einen Katalysator im Abgassystem einer Brennkraftmaschine, insbesondere einer gemischverdichtenden selbstzündenden Brennkraftmaschine, nach der Figur 1 ist ein Reduktionsmittelvorratsbehälter 1 vorgesehen, der bei einer Nutzkraftfahrzeug-Anwendung ein Fassungsvermögen von ca. 50 l für eine Harnstoff-Wasser-Lösung hat. Von dem Reduktionsmittelvorratsbehälter 1 führt eine Versorgungsleitung 2 zu einem Reduktionsmittelverbrauchsbehälter 3. Das Volumen des Reduktionsmittelverbrauchsbehälters 3 entspricht lediglich einem Bruchteil des Volumens des Reduktionsmittelvorratsbehälters 1. So beträgt das Fassungsvermögen des Reduktionsmittelverbrauchsbehälters 3 bei einer Nutzkraftfahrzeug-Anwendung ca. 1 l, was etwa der Menge an Harnstoff-Wasser-Lösung entspricht, die etwa an einem Tag zur Reduzierung der Stickoxid-Emissionen im Abgas erforderlich ist. Damit ergibt sich ein klein und kompakt ausgestalteter Reduktionsmittelverbrauchsbehälter 3. In der die Verbindung zwischen dem Reduktionsmittelvorratsbehälter 1 und dem Reduktionsmittelverbrauchsbehälter 3 herstellenden Versorgungsleitung 2 ist ein Rückschlagventil 5 angeordnet, das in Richtung zum Reduktionsmittelverbrauchsbehälter 3 öffnet. Mit einem Gasraum 6 oberhalb der Harnstoff-Wasser-Lösung im Reduktionsmittelvorratsbehälter 1 ist ein in Richtung zur Atmosphäre hin öffnendes Druckbegrenzungsventil 7 verbunden, das bei einem Druck von ca. 1,3 bar öffnet, so daß der Reduktionsmittelvorratsbehälter 1 nicht nach den Richtlinien der Druckbehälterverordnung ausgelegt werden muß.

Die Gemischabgabevorrichtung weist weiterhin eine Pumpe 11 auf, die Gas unter einem Druck mit beispielsweise 7 bar in einen Gasspeicher 12 fördert. Als Gas dient z. B. Luft, Abgas aus dem Abgassystem der Brennkraftmaschine oder ein anderes Gas. Mit dem Gasspeicher 12 ist ebenfalls eine Druckgasleitung 13 verbunden, in der in Reihe ein verstellbares Drosselventil 16, ein Dosierdruckregelventil 17 und ein elektromagnetisch betätigbares Gassteuerventil 18 angeordnet sind. Das Dosierdruckregelventil 17 regelt den stromabwärtigen Druck in der Druckgasleitung 13 beispielsweise auf ca. 1 bar. Das als 2/2-Wegeventil ausgebildete Gassteuerventil 18 hat eine Sperrstellung, in der es in Figur 1 dargestellt ist, und eine Durchlaßstellung.

Von dem Reduktionsmittelverbrauchsbehälter 3 führt eine Harnstoffdruckleitung 20 zu einer Dosier- und Mischeinrichtung 21, die elektromagnetisch betätigbar ist und zu der ebenfalls die Druckgasleitung 13 führt. In der Dosier- und Mischeinrichtung 21 erfolgt eine Mischung der über die Harnstoffdruckleitung 20 zugeführten Harnstoff-Wasser-Lösung mit dem über die Druckgasleitung 13 zugeführten Druckgas. Dabei erfolgt die Dosierung der Harnstoff-Wasser-Lösung beispielsweise mittels eines nicht näher dargestellten Einspritzventiles, beispielsweise eines durch die DE 34 11 537 A1 bekannten Einspritzventiles für die Benzineinspritzung. Wie beispielsweise in der EP 0 586 913 A2 beschrieben und dargestellt ist, wird der dosierten Harnstoff-Wasser-Lösung in einem Mischraum das Druckgas zur Bildung eines homogenen Gemisches zugeführt. Die Ansteuerung des Gassteuerventils 18 und der Dosier- und Mischeinrichtung 21 erfolgt durch ein elektronisches Steuergerät 22. Das mittels des Druckgases gleichmäßig und fein aufbereitete Gemisch mit der Harnstoff-Wasser-Lösung wird in ein Abgassystem 23 mittels einer daran vorgesehenen Zerstäubereinrichtung 25 stromaufwärts eines Katalysators 26 bekannter Bauart eingeblasen. Die Zerstäubereinrichtung 25 wird dabei in einfachster Form durch eine Düse mit einer Ausblaseöffnung gebildet, es können jedoch auch mehrere Ausblaseöffnungen vorgesehen sein. Der in den Katalysator 26 eingebrachte Harnstoff wird durch chemische Reaktionen in Ammoniak überführt, welcher die Reduktion der Stickoxide im Abgas bewirkt.

Von der Druckgasleitung 13 zweigt zwischen dem Drosselventil 16 und dem Dosierdruckregelventil 17 eine Zweiggasleitung 27 ab, die zu einem oberhalb der Harnstoff-Wasser-Lösung im Reduktionsmittelverbrauchsbehälter 3 gebildeten Gasraum 30 führt und über die eine Verbindung vom Reduktionsmittelverbrauchsbehälter 3 zu der Druckgasquelle herstellbar ist, die durch die Pumpe 11 und den Gasspeicher 12 gebildet wird. In der Zweiggasleitung 27 ist in Reihe ein erstes Druckregelventil 31 und stromabwärts davon ein Steuerventil 32 angeordnet. Das erste Druckregelventil 31 regelt stromabwärts in der Zweiggasleitung 27 einen Gasdruck von ca. 3 bar. Das Steuerventil 32 ist bei dem vorliegenden Ausführungsbeispiel als 3/3-Wegeventil ausgebildet und elektromagnetisch betätigt durch das elektronische Steuergerät 22 ansteuerbar. Im erregten Zustand des Steuerventiles 39 nimmt dieses eine erste Schaltstellung 35 ein, in der dieses eine Verbindung zwischen dem ersten Druckregelventil 31 und dem Reduktionsmittelverbrauchsbehälter 3 herstellt, während es in einer zweiten Schaltstellung 36 die Verbindung zwischen dem Reduktionsmittelverbrauchsbehälter 3 und dem ersten Druckregelventil 31 unterbricht und eine Verbindung vom Gasraum 30 des Reduktionsmittelverbrauchsbehälters 3 zu einer Entlastungsleitung 37 öffnet, die zum Abgassystem 23 und damit zur Atmosphäre führt. Im nicht erregten Zustand des Steuerventils 32 nimmt dieses eine dritte Schaltstellung 40 ein, in der die Verbindung vom Reduktionsmittelverbrauchsbehälter 3 zum ersten Druckregelventil 31 und damit zur Gasdruckquelle 11, 12 und die Verbindung zur Entlastungsleitung 37 unterbrochen wird.

Im oder am Reduktionsmittelverbrauchsbehälter 3 ist ein die Füllhöhe der Harnstoff-Wasser-Lösung im Reduktionsmittelverbrauchsbehälter 3 messender Füllstandssensor 41 bekannter Bauart angeordnet, der beispielsweise auf photooptischer Basis arbeitet und mit dem elektronischen Steuergerät 22 verbunden ist, um wenigstens dann Meßsignale an das elektronische Steuergerät 22 weiterzuleiten, wenn die minimale oder die maximale Füllhöhe der Harnstoff-Wasser-Lösung im Reduktionsmittelverbrauchsbehälter 3 erreicht ist, um so ein Nachfüllen der Harnstoff-Wasser-Lösung in den Reduktionsmittelverbrauchsbehälter einzuleiten oder zu unterbrechen. Um einen zuverlässigen Betrieb der Gemischabgabevorrichtung auch bei niederen Temperaturen, z. B. im Winterbetrieb zu gewährleisten, ist im Reduktionsmittelverbrauchsbehälter 3 ein durch das elektronische Steuergerät 22 angesteuertes elektrisches Heizelement 42 angeordnet, das ein Gefrieren bei niederen Temperaturen, beispielsweise unterhalb -10°C, verhindert. Eine Verbindungsleitung 45 führt vom Gasspeicher 12 zum Reduktionsmittelvorratsbehälter 1. In der Verbindungsleitung 45 ist ein zweites Druckregelventil 46 angeordnet, das einen Gasdruck von ca. 1,2 bar im Reduktionsmittelvorratsbehälter 1 regelt.

Die erfindungsgemäße Gemischabgabevorrichtung benötigt keinerlei Förderpumpe zur Druckerzeugung für die in das Abgassystem 23 der Brennkraftmaschine einzublasende Harnstoff-Wasser-Lösung. Das in der ersten Schaltstellung 35 des Steuerventils 32 in den Reduktionsmittelverbrauchsbehälter 3 eingeleitete Druckgas bewirkt einen Druckaufbau in der gleichen Höhe in der Harnstoff-Wasser-Lösung im Reduktionsmittelverbrauchsbehälter 3, die somit über die Harnstoffdruckleitung 20 unter diesem Druck der Dosier- und Mischeinrichtung 21 zugeleitet wird. Spätestens dann, wenn in dem Reduktionsmittelverbrauchsbehälter 3 durch den Füllstandsensor 41 das Erreichen der minimalen Füllstandshöhe der Harnstoff-Wasser-Lösung signalisiert wird, wird durch das elektronische Steuergerät 22 das Steuerventil 32 in seine zweite Schaltstellung 36 umgeschaltet und damit der Druck im Reduktionsmittelverbrauchsbehälter 3 nahezu auf etwa Atmosphärendruck entlastet. Da in dem Reduktionsmittelvorratsbehälter 1 ein über dem Atmosphärendruck liegender Druck von ca. 1,2 bar herrscht, öffnet das Rückschlagventil 5 in der Versorgungsleitung 2 und Harnstoff-Wasser-Lösung strömt über die Versorgungsleitung 2 in den Reduktionsmittelverbrauchsbehälter 3, bis der Füllstandsensor 41 die maximal zulässige Füllmenge von Harnstoff-Wasser-Lösung dem elektronischen Steuergerät 22 signalisiert, das daraufhin das Steuerventil 32 ansteuert, so daß das Steuerventil entweder seine sperrende dritte Schaltstellung 40 einnimmt oder seine erste Schaltstellung 35, so daß durch den erneuten Druckaufbau im Reduktionsmittelverbrauchsbehälter 3 das Rückschlagventil 5 geschlossen wird. Dieser Nachfüllvorgang des Reduktionsmittelverbrauchsbehälters 3 kann beispielsweise auch so geregelt sein, daß in Dosierpausen der Dosier- und Mischeinrichtung 21 oder beim Abstellen der Brennkraftmaschine oder bei einem Start der Brennkraftmaschine das elektronische Steuergerät 22 bei einer Füllhöhe der Harnstoff-Wasser-Lösung unterhalb der maximalen Füllhöhe das Steuerventil 32 in der geschilderten Weise ansteuert, um ein Nachfüllen des Reduktionsmittelverbrauchsbehälters 3 bis zur maximalen Füllhöhe der Harnstoff-Wasser-Lösung durchzuführen.

Das in der Figur 2 dargestellte zweite Ausführungsbeispiel einer erfindungsgemäßen Gemischabgabevorrichtung unterscheidet sich von dem ersten Ausführungsbeispiel nach Figur 1 lediglich dadurch, daß das Steuerventil 32 als 2/2-Wegeventil mit der ersten Schaltstellung 35 und der zweiten Schaltstellung 36 ausgebildet ist, also nicht mehr die sperrende dritte Schaltstellung des Steuerventils 32 nach Figur 1 aufweist und anstelle des Rückschlagventils 5 in der Versorgungsleitung 2 ein Nachfüllventil 48 vorgesehen ist. Die gegenüber dem Ausführungsbeispiel nach Figur 1 gleichbleibenden und gleichwirkenden Teile sind bei dem Ausführungsbeispiel nach Figur 2 durch die gleichen Bezugszeichen gekennzeichnet. Das Nachfüllventil 48 ist elektromagnetisch ansteuerbar durch das elektronische Steuergerät 22 und hat eine Durchgangsstellung 49, in der es die Versorgungsleitung 2 vom Reduktionsmittelvorratsbehälter 1 zum Reduktionsmittelverbrauchsbehälter 3 öffnet, während es im nicht erregten Zustand eine Sperrstellung 50 einnimmt.

Die Wirkungsweise des Steuerventils 32 des Ausführungsbeispieles nach Figur 2 entspricht der Wirkungsweise des Steuerventils 32 des Ausführungsbeispieles nach Figur 1. Das Nachfüllventil 48 wird immer dann durch das elektronische Steuerventil in die Durchgangsstellung 49 geschaltet, wenn Harnstoff-Wasser-Lösung aus dem Reduktionsmittelvorratsbehälter 1 in den Reduktionsmittelverbrauchsbehälter 3 nachgefüllt werden soll.

## Patentansprüche

1. Vorrichtung zur Einführung wenigstens eines Reduktionsmittels in ein Abgassystem einer Brennkraftmaschine, mit einem Reduktionsmittelvorratsbehälter, mit einer Druckgasquelle, mit einer Zufuhreinrichtung zur dosierten Zufuhr des Reduktionsmittels in das Abgassystem, insbesondere einer Dosier- und Mischeinrichtung (21) mit einer stromabwärts der Dosicr- und Mischeinrichtung am Abgassystem vorgesehenen Zerstäubereinrichtung, wobei zwischen dem Reduktionsmittelvorratsbehälter (1) und der Zufuhreinrichtung ein Reduktionsmittelverbrauchsbehälter (3) mit einem Volumen vorgesehen ist, das einem Bruchteil des Volumens des Reduktionsmittelvorratsbehälters (1) entspricht, wobei die Druckgasquelle (11, 12) über ein erstes Druckregelventil (31) mit dem Reduktionsmittelverbrauchsbehälter (3) verbindbar ist, **dadurch gekennzeichnet, dass** zwischen dem ersten Druckregelventil (31) und dem Reduktionsmittelverbrauchsbehälter (3) ein Steuerventil (32) vorgesehen ist, das in einer ersten Schaltstellung (35) eine Verbindung vom Reduktionsmittelverbrauchsbehälter (3) zum ersten Druckregelventil (31) herstellt und in einer zweiten Schaltstellung (36) die Verbindung zum ersten Druckregelventil (31) unterbricht und eine Verbindung von einem Gasraum (30) des Reduktionsmittelverbrauchsbehälters (3) zur Atmosphäre (23) öffnet.

2. Vorrichtung nach Anspruch 1, **dadurch gekennzeichnet, daß** die Druckgasquelle (11, 12) über ein zweites Druckregelventil (46) mit dem Reduktionsmittelvorratsbehälter (1) verbindbar ist.

3. Vorrichtung nach Anspruch 2, **dadurch gekennzeichnet, daß** der vom ersten Druckregelventil (31) im Reduktionsmittelverbrauchsbehälter (3) geregelte Gasdruck größer als der vom zweiten Druckregelventil (46) im Reduktionsmittelvorratsbehälter (I) geregelte Gasdruck ist.

4. Vorrichtung nach Anspruch 3, **dadurch gekennzeichnet, daß** der vom ersten Druckregelventil (31) geregelte Gasdruck ca. 3 bar und der vom zweiten Druckregelventil (46) geregelte Gasdruck ca. 1,2 bar beträgt.

5. Vorrichtung nach einem der vorhergehenden Ansprüche, **dadurch gekennzeichnet, daß** zwischen dem Reduktionsmittelvorratsbehälter (1) und dem Reduktionsmittelverbrauchsbehälter (3) ein in Richtung zum Reduktionsmittelverbrauchsbehälter (3) öffnendes Rückschlagventil (5) angeordnet ist.

6. Vorrichtung nach einem der vorhergehenden Ansprüche, **dadurch gekennzeichnet, daß** zwischen dem Reduktionsmittelvorratsbehälter (1) und dem Reduktionsmittelverbrauchsbehälter (3) ein Nachfüllventil (48) angeordnet ist, das in einer Sperrstellung (50) die Verbindung zwischen dem Reduktionsmittelvorratsbehälter (1) und dem Reduktionsmittelverbrauchsbehälter (3) unterbricht und in einer Durchgangsstellung (49) zum Nachfüllen des Reduktionsmittelverbrauchsbehälters (3) diese Verbindung zwischen Reduktionsmittelvorratsbehälter (1) und Reduktionsmittelverbrauchsbehälter (3) öffnet.

7. Vorrichtung nach Anspruch 1, **dadurch gekennzeichnet, daß** im oder am Reduktionsmittelverbrauchsbehälter (3) ein die Reduktionsmittelfüllhöhe messender Füllstandssensor (41) angeordnet ist.

8. Vorrichtung nach Anspruch 1, **dadurch gekennzeichnet, daß** im Reduktionsmittelverbrauchsbehälter (3) ein Heizelement (42) angeordnet ist.

## Claims

1. Apparatus for introducing at least one reducing agent into an exhaust system of an internal combustion engine, having a reducing agent storage tank, having a compressed-gas source, having a feed device for the metered feeding of the reducing agent into the exhaust system, in particular a metering and mixing device (21) with an atomizer device provided at the exhaust system downstream of the metering and mixing device, a reducing agent consumption tank (3) being provided between the reducing agent storage tank (1) and the feed device, with a volume which corresponds to a fraction of the volume of the reducing agent storage tank (1), it being possible for the compressed-gas source (11, 12) to be connected to the reducing agent consumption tank (3) via a first pressure regulating valve (31), **characterized in that** a control valve (32), which in a first switching position (35) produces a connection from the reducing agent consumption tank (3) to the first pressure regulating valve (31) and in a second switching position (36) interrupts the connection to the first pressure regulating valve (31) and opens up a connection from a gas space (30) of the reducing agent consumption tank (3) to the atmosphere (23), is provided between the first pressure regulating valve (31) and the reducing agent consumption tank (3).

2. Apparatus according to Claim 1, **characterized in that** the compressed-gas source (11, 12) can be connected to the reducing agent storage tank (1) via a second pressure regulating valve (46).

3. Apparatus according to Claim 2, **characterized in that** the gas pressure regulated in the reducing agent consumption tank (3) by the first pressure regulating valve (31) is greater than the gas pressure regulated in the reducing agent storage tank (1) by the second pressure regulating valve (46).

4. Apparatus according to Claim 3, **characterized in that** the gas pressure regulated by the first pressure regulating valve (31) is approx. 3 bar and the gas pressure regulated by the second pressure regulating valve (46) is approx. 1.2 bar.

5. Apparatus according to one of the preceding Claims, **characterized in that** a nonreturn valve (5), which opens in the direction of the reducing agent consumption tank (3), is arranged between the reducing agent storage tank (1) and the reducing agent consumption tank (3).

6. Apparatus according to one of the preceding Claims, **characterized in that** a top-valve (48), which in a blocking position (50) interrupts the connection between the reducing agent storage tank (1) and the reducing agent consumption tank (3) and in a passage position (49) for topping up the reducing agent consumption tank (3) opens this connection between reducing agent storage tank (1) and reducing agent consumption tank (3), is arranged between the reducing agent storage tank (1) and the reducing agent consumption tank (3).

7. Apparatus according to Claim 1, **characterized in that** a level sensor (41), which measures the level of reducing agent, is arranged in or on the reducing agent consumption tank (3).

8. Apparatus according to Claim 1, **characterized in that** a heating element (42) is arranged in the reducing agent consumption tank (3).

## Revendications

1. Dispositif d'introduction d'au moins un agent réducteur dans un système d'échappement d'un moteur à combustion interne, comportant un réservoir d'alimentation d'agent réducteur, une source de gaz sous pression, un dispositif d'introduction permettant le dosage de l'agent réducteur dans le système d'échappement, notamment un dispositif de dosage et de mélange (21) avec un dispositif de pulvérisation prévu en aval du dispositif de dosage et de mélange avec entre le réservoir d'alimentation d'agent réducteur (1) et le dispositif d'introduction, un réservoir de consommation d'agent réducteur (3) ayant un volume correspondant à une fraction du volume du réservoir d'alimentation d'agent réducteur (1), la source de gaz sous pression (11, 12) pouvant être raccordée au réservoir de consommation d'agent réducteur (3) par une première soupape régulatrice de pression (31),
**caractérisé en ce qu'**
entre la première soupape régulatrice de pression (31) et le réservoir de consommation d'agent réducteur (3), dans une première position de commutation (35), une soupape de commande (32) crée une liaison entre le réservoir de consommation d'agent réducteur (3) et la première soupape régulatrice de pression (31) et, dans une seconde position de commutation (36), elle interrompt la liaison avec la première soupape régulatrice de pression (31) et ouvre une liaison entre l'espace gazeux (30) du réservoir de consommation d'agent réducteur (3) et l'atmosphère (23).

2. Dispositif selon la revendication 1,
**caractérisé en ce que**
la source de gaz sous pression (11, 12) est raccordée au réservoir d'alimentation d'agent réducteur (1) par une seconde soupape régulatrice de pression (46).

3. Dispositif selon la revendication 2,
**caractérisé en ce que**
la pression de gaz régulée dans le réservoir de consommation d'agent réducteur (3) par la première soupape régulatrice de pression (31) est supérieure à la pression de gaz régulée dans le réservoir d'alimentation d'agent réducteur (1) par la seconde soupape régulatrice de pression (46).

4. Dispositif selon la revendication 3,
**caractérisé en ce que**
la pression de gaz régulée par la première soupape régulatrice de pression (31) s'élève à environ 3 bar et la pression de gaz régulée par la seconde soupape régulatrice de pression (46) s'élève à environ 1,2 bar.

5. Dispositif selon l'une des revendications précédentes,
**caractérisé en ce qu'**
entre le réservoir d'alimentation d'agent réducteur (1) et le réservoir de consommation d'agent réducteur (3), un clapet anti-retour (5) s'ouvre dans la direction du réservoir de consommation d'agent réducteur (3).

6. Dispositif selon l'une des revendications précédentes,
**caractérisé en ce qu'**
entre le réservoir d'alimentation d'agent réducteur (1) et le réservoir de consommation d'agent réducteur (3), une soupape de remplissage (48) dans une position de blocage (50), interrompt la liaison entre le réservoir d'alimentation d'agent réducteur (1) et le réservoir de consommation d'agent réducteur (3) et, dans une position de passage (49), ouvre cette liaison entre le réservoir d'alimentation d'agent réducteur (1) et le réservoir de consommation d'agent réducteur (3) pour permettre le remplissage du réservoir de consommation d'agent réducteur (3).

7. Dispositif selon la revendication 1,
**caractérisé en ce qu'**
un détecteur de niveau (41) permettant de mesurer le niveau de remplissage de l'agent réducteur est disposé dans ou sur le réservoir de consommation d'agent réducteur (3).

8. Dispositif selon la revendication 1,
**caractérisé en ce qu'**
un élément chauffant (42) est disposé dans le réservoir de consommation d'agent réducteur (3).
